# EUROPEAN PATENT SPECIFICATION

(11) **EP 3 840 088 B1**
(45) Date of publication and mention of the grant of the patent: **13.11.2024**
(21) Application number: 19849402.3
(22) Date of filing: 13.08.2019
(51) Int. Cl.: H01M 4/36, H01M 4/587, H01M 4/62, H01M 10/052, C01B 32/05, C01B 32/963, H01M 4/04, C01B 33/029, H01M 4/13, C01B 32/956, H01M 4/133

(54) **NEGATIVE ELECTRODE ACTIVE MATERIAL, METHOD FOR PRODUCING SAME, AND LITHIUM SECONDARY BATTERY HAVING NEGATIVE ELECTRODE INCLUDING SAME**
AKTIVMATERIAL EINER NEGATIVELEKTRODE, VERFAHREN ZU SEINER HERSTELLUNG UND LITHIUM-SEKUNDÄRBATTERIE MIT NEGATIVELEKTRODE DAMIT
MATÉRIAU ACTIF D'ÉLECTRODE NÉGATIVE, SON PROCÉDÉ DE PRODUCTION, ET BATTERIE SECONDAIRE AU LITHIUM AYANT UNE ÉLECTRODE NÉGATIVE LE COMPRENANT

(30) Priority: 14.08.2018 KR 20180094865
(43) Date of publication of application: 23.06.2021
(73) Proprietor: SJ ADVANCED MATERIALS CO., LTD., Eonyang-eup Ulju-gun, Ulsan 44936 (KR)
(72) Inventor: CHO, Jae Phil, Ulju-gun Ulsan 44919 (KR); SUNG, Jae Kyung, Ulju-gun Ulsan 44919 (KR); MA, Ji Young, Ulju-gun Ulsan 44919 (KR)
(74) Representative: Studio Torta S.p.A.
(86) International application number: PCT/KR2019/010254
(87) International publication number: WO 2020/036397

(56) References cited:
- EP-A1- 2 432 050
- KR-A- 20120 029 317
- KR-A- 20140 067 789
- KR-A- 20140 067 789
- KR-A- 20150 109 057
- KR-B1- 100 589 309
- US-A1- 2002 164 479
- US-A1- 2015 228 967

## Description

### TECHNICAL FIELD

The present disclosure was made with funding from the Ministry of Trade, Industry and Energy under Grant No. 1415156147 entitled "Development of Lithium Secondary Battery (>450 Wh/L) Material for Ultra-long Lifespan EES and Cell Processing Technology."

The present disclosure relates to a negative electrode active material, a method of preparing the same, and a lithium battery including a negative electrode including the same.

### BACKGROUND ART

Lithium secondary batteries have excellent charging/discharging efficiency and capacity, have no memory effect, and have little degree of natural discharging when not in use, and thus have been used as essential parts of portable electronic devices after commercialization. Recently, the use of lithium secondary batteries has been expanded from fields where small- and medium-sized batteries are used, such as vacuum cleaners and power tools, to fields where medium- and large-sized batteries are used, such as electric vehicles, energy storage devices, and various robots.

Lithium secondary batteries using carbon-based negative electrode materials are mainly used due to high price competitiveness and excellent energy lifespan characteristics thereof. Lithium secondary batteries using carbon-based negative electrode materials are known from US2002164479 and EP2432050. However, there are still limitations in low density and low discharge capacity. Thus, there has been attempted to provide a negative electrode for a lithium secondary battery having improved energy density and capacity.

In terms of improving energy density and capacity, studies on the use of silicon having a theoretical energy density of 3,600 mAh/g as a negative electrode active material have been attempted, and SiOx, Si-metal alloys, and Si-carbon composites are being researched as candidate groups.

Among these candidate groups, Si-carbon composites are attracting attention in terms of efficiency and lifespan characteristics, but there is a limitation in that the lifespan characteristics of a negative electrode active material are deteriorated due to the volume change of Si during charging and discharging.

Therefore, there is a need to develop a Si-carbon-composite-based negative electrode active material which is in a stable form and exhibits enhanced lifespan characteristics, as compared to existing Si-carbon-composite-based negative electrode active materials.

### DESCRIPTION OF EMBODIMENTS

### TECHNICAL PROBLEM

An aspect provides a novel negative electrode active material.

Another aspect provides a method of preparing the negative electrode active material.

Another aspect provides a lithium secondary battery including a negative electrode employing the negative electrode active material.

### SOLUTION TO PROBLEM

According to an aspect of an embodiment, a negative electrode active material for a lithium secondary battery according to claim 1 is provided.

According to an aspect of another embodiment, a method of preparing a negative electrode active material for a lithium secondary battery according to claim 11 is provided.

According to an aspect of another embodiment, a lithium secondary battery according to claim 14 is provided.

### ADVANTAGEOUS EFFECTS OF DISCLOSURE

A negative electrode active material according to the present disclosure includes, on a carbon-based material, a silicon-containing amorphous coating layer represented by SiCₓ where 0<x<0.5, and thus suppresses a change in the volume of Si particles during charging and discharging, resulting in reduced cracks in the negative electrode active material. Accordingly, a lithium secondary battery employing a negative electrode including the negative electrode active material can exhibit enhanced lifespan characteristics.

### BRIEF DESCRIPTION OF DRAWINGS

FIG. 1 is an XRD graph of a negative electrode active material according to an embodiment.
FIG. 2 illustrates SEM and TEM images showing the surface and cross-section of a negative electrode active material according to an embodiment.
FIG. 3 illustrates EELS line scanning results of a negative electrode active material according to an embodiment.
FIG. 4 illustrates the elemental content analysis results of a negative electrode active material according to an embodiment.
FIG. 5 is a graph showing the electrochemical evaluation data of half-cells according to Example 1 and Comparative Example 1.
FIG. 6 is a graph showing the electrochemical evaluation data of half-cells according to Example 2 and Example 1.
FIG. 7 is a graph showing the differential capacities of half-cells manufactured according to Examples 3 to 6 and Comparative Examples 2 and 3.
FIG. 8 is a graph showing the XRD analysis results of silicon-containing amorphous coating layers in negative electrode active materials obtained in Preparation Examples 4, 8, and 10.
FIG. 9 is a graph showing the electrochemical evaluation data of full-cells according to Example 7 and Comparative Example 4.
FIG. 10 illustrates images showing the cross-sections of negative electrode active materials after full-cells according to Example 7 and Comparative Example 4 were charged and discharged 50 times.
FIG. 11 is a graph showing the electrochemical evaluation data of full-cells manufactured according to Examples 8 to 10.
FIG. 12 is a schematic view of a lithium secondary battery according to an embodiment.

### <EXPLANATION OF REFERENCE NUMERALS DESIGNATING THE MAJOR ELEMENTS OF THE DRAWINGS>

1: Lithium battery 2: Negative electrode
3: Positive electrode 4: separator
5; Battery case 6: Cap assembly

### MODE OF DISCLOSURE

As the present inventive concept, which will be described below, allows for various changes and numerous embodiments, particular embodiments will be illustrated in the drawings and described in the detailed description in detail. However, this is not intended to limit the present inventive concept to particular modes of practice, and it is to be appreciated that all changes, equivalents, and substitutes fall within the technical scope of the present inventive concept.

The terms used in the following description are used to describe specific embodiments and are not intended to limit the present inventive concept. An expression used in the singular includes an expression in the plural, unless the content clearly indicates otherwise. In the following description, it should be understood that terms, such as "include" and "have", are used to indicate the presence of stated features, numbers, steps, operations, elements, parts, components, materials, or a combination thereof described in the specification without excluding in advance the possibility of the presence or addition of one or more other features, numbers, steps, operations, elements, parts, components, materials, or combinations thereof. The expression "/" used herein may be interpreted as "and," and may also be interpreted as "or."

In the drawings, the diameters, lengths, and thicknesses of various elements, layers, and regions are exaggerated or downsized for clear illustration. Throughout the specification, like reference numerals denote like elements. In the entire specification, when a portion of a layer, a film, a region, a plate, or the like is referred to as being "on" or "above" another portion, it includes not only a case in which the portion is directly on the other portion, but also a case in which an intervening portion is present therebetween. Throughout the specification, although terms such as "first," "second," and the like may be used to described various components, such components must not be limited by the above terms. The above terms are used only to distinguish one component from another. Some of the elements in the drawings may be omitted, but it is intended to help understand the characteristics of the disclosure and is not intended to exclude the omitted elements.

Hereinafter, a negative electrode active material according to example embodiments, a method of preparing the negative electrode active material, and a lithium secondary battery employing a negative electrode including the same will be described in more detail.

A negative electrode active material according to an embodiment includes: a carbon-based material; and a silicon-containing amorphous coating layer disposed on the carbon-based material and represented by SiC_{X} where 0.07<x<0.7, in which the silicon-containing amorphous coating layer includes silicon particles having a diameter of 5 nm or less.

According to one embodiment, the SiCₓ is a composite of silicon and carbon, and may include silicon particles, carbon particles, silicon carbide (SiC), or a combination thereof, but the present disclosure is not limited thereto.

According to one embodiment, in SiCₓ, 0.2<x<0.5. For example, x may satisfy 0.2<x<0.3. For example, x may be 0.25.

The silicon-containing amorphous coating layer is formed by vapor co-deposition of a silicon source and a carbon source, which will be described below. Thus, an increase in the x value means an increase in volume occupied by carbon in the obtained silicon-containing amorphous coating layer, and as a result, the volume occupied by silicon and the size of silicon particles are relatively smaller than those in the case where the x value is small.

This phenomenon is a characteristic result from vapor co-deposition of a silicon source and a carbon source, and when the vapor co-deposition is performed by other thin-film forming processes, e.g., methods such as sputtering, it is difficult to adjust the size of silicon particles in the thin film-forming process.

According to one embodiment, the silicon particles may include crystalline silicon particles.

According to one embodiment, the silicon-containing amorphous coating layer shows no peak at 0.43 V in differential capacity analysis (dQ/dV). Generally, it is known that, in the case of including silicon microparticles, a peak appears at 0.43 V in differential capacity analysis. However, since the silicon-containing amorphous coating layer does not show such a peak, the coating layer does not include micro-sized silicon particles.

According to one embodiment, the silicon particles (i.e. silicon nanoparticles) may have a diameter of 3 nm to 5 nm. For example, the diameter of the silicon nanoparticles may be in a range of 4 nm to 5 nm.

The smaller the diameter of the silicon nanoparticles, the lower the magnitude of stress according to volumetric expansion, and thus the lifespan characteristics of the active material may be enhanced.

Meanwhile, when the size of the silicon particles exceeds 5 nm, the stress of the silicon particles increases, and thus an empty space may be formed in the silicon-containing amorphous coating layer. On the other hand, when the size of the silicon particles is less than 3 nm, the amount of amorphous carbon included in the silicon-containing amorphous coating layer is excessively large, making it difficult for Li ions to pass therethrough, and consequently, resistance increases during charging and discharging, resulting in deteriorated battery characteristics.

The silicon-containing amorphous coating layer may have a structure in which silicon nanoparticles are included in a carbon matrix. The carbon matrix may be amorphous carbon. The amorphous carbon matrix may act as a buffer for the expansion of silicon particles during charging, and undergoes isotropic volumetric expansion, and thus, stress applied to the coating layer is reduced, as compared to the case of unidirectional expansion, and accordingly, cracks in the coating layer may be suppressed.

The silicon-containing amorphous coating layer may further include a carbon coating layer on the outermost surface thereof, and is able to maintain the amorphous state even under a condition of high temperatures exceeding 900 ºC for the deposition of the outermost carbon coating layer. Although not bound by theory, it is believed that, since the silicon-containing amorphous coating layer is present as a mixture of silicon and amorphous carbon, carbon is not crystallized in the silicon-containing amorphous coating layer.

The amorphous carbon matrix has a function of buffering stress applied to the silicon-containing amorphous coating layer by accommodating the expansion of the silicon nanoparticles during charging. Accordingly, a change in the volume of the silicon nanoparticles is suppressed, and consequently, the occurrence of cracks in the negative electrode active material is prevented, and thus cycle characteristics may be remarkably enhanced.

According to one embodiment, the silicon-containing amorphous coating layer includes silicon nanoparticles and a carbon matrix, and the carbon matrix is included in an amount of 10 parts by weight to 60 parts by weight with respect to 100 parts by weight of the total of the silicon-containing amorphous coating layer.

For example, the carbon matrix may be included in an amount of 10 parts by weight to 55 parts by weight, 10 parts by weight to 50 parts by weight, 10 parts by weight to 45 parts by weight, 10 parts by weight to 40 parts by weight, 15 parts by weight to 60 parts by weight, 20 parts by weight to 60 parts by weight, 25 parts by weight to 60 parts by weight, or 30 parts by weight to 60 parts by weight, with respect to 100 parts by weight of the total of the silicon-containing amorphous coating layer, but the present disclosure is not limited thereto.

When the amount of the carbon matrix is within the above range, the expansion of the silicon nanoparticles may be effectively controlled, and enhancement of lifespan characteristics may be expected.

The carbon matrix is inert to lithium ions and does not participate in the intercalation and deintercalation of lithium ions.

According to one embodiment, the silicon-containing amorphous coating layer may have a thickness of 5 nm to 4,000 nm. For example, the thickness of the silicon-containing amorphous coating layer may be in a range of 5 nm to 3,000, 5 nm to 2,000 nm, 5 nm to 1,000 nm, 5 nm to 500 nm, 5 nm to 400 nm, 5 nm to 300 nm, 5 nm to 200 nm, 5 nm to 100 nm, 5 nm to 90 nm, 5 nm to 80 nm, 5 nm to 70 nm, 5 nm to 60 nm, or 5 nm to 50 nm, but the present disclosure is not limited thereto, and the silicon-containing amorphous coating layer may be formed to a thickness sufficient to include the carbon matrix.

According to one embodiment, the silicon-containing amorphous coating layer may be partially or completely disposed on a surface of the carbon-based material. For example, the silicon-containing amorphous coating layer may be disposed as a continuous layer on the surface of the carbon-based material.

According to one embodiment, the carbon-based material may be porous. The porous carbon-based material is stable due to a small volume change during charging and discharging. In addition, the space formed by the porous structure of the porous carbon-based material is able to accommodate a volume change, and thus it is desirable in terms of lifespan characteristics. According to one embodiment, the carbon-based material may include natural graphite, artificial graphite, hard carbon, soft carbon, or a combination thereof, but the present disclosure is not limited thereto, and the carbon-based material is a material capable of reversibly intercalating and deintercalating lithium ions and may be any one selected from materials formed of carbon commonly used in lithium secondary batteries.

According to one embodiment, the carbon coating layer disposed on the surface of the silicon-containing amorphous coating layer may include amorphous carbon. For example, carbon included in the carbon coating layer may be a calcined product of a carbon precursor. The carbon precursor may be any carbon precursor that may be used in the art and may be calcined to obtain a carbon-based material. For example, the carbon precursor may be at least one selected from the group consisting of a polymer, coal tar pitch, petroleum pitch, meso-phase pitch, cokes, low molecular weight heavy oil, a coal-based pitch, and a derivative thereof. The carbon coating layer is formed on the outermost surface of the negative electrode active material, thereby forming an SEI, and Li⁺ ions selectively pass therethrough, thus preventing metal particles from contacting an electrolyte solution and the like. In addition, the carbon coating layer suppresses volumetric expansion during charging and discharging, and acts as an electron transfer path in the negative electrode active material, thereby contributing to improvement in electrical conductivity.

The thickness of the carbon coating layer may be in a range of 2 nm to 5 µm, and may be in any range represented by any two values selected from those within the above range. When the thickness of the carbon coating layer is within the above range, electrical conductivity is enhanced and at the same time, volumetric expansion may also be sufficiently suppressed. When the thickness of the carbon coating layer is less than 2 nm, the carbon coating layer cannot be expected to act as a buffer layer capable of sufficiently enhancing electrical conductivity and accommodating volumetric expansion. When the thickness of the carbon coating layer exceeds 5 µm, the carbon coating layer acts as a resistance layer in the intercalation and deintercalation of lithium during charging and discharging, thus causing a deterioration in rate capability.

Hereinafter, a method of preparing a negative electrode active material according to an embodiment will be described.

According to an embodiment, the method of preparing a negative electrode active material includes:
preparing a carbon-based material; and
providing, on a surface of the carbon-based material, a silicon-containing amorphous coating layer represented by SiC_{X} where 0.07<x<0.7.

According to one embodiment, the providing of the silicon-containing amorphous coating layer may include providing a silane-based gas and a hydrocarbon-based gas.

According to one embodiment, the providing of the silicon-containing amorphous coating layer may include depositing a silane-based gas and a hydrocarbon-based gas on the surface of the carbon-based material by chemical vapor deposition (CVD).

According to one embodiment, the silane-based gas and the hydrocarbon-based gas may be sequentially or simultaneously provided. For example, the silane-based gas and the hydrocarbon-based gas may be simultaneously provided.

For example, the silane-based gas may be a silicon-based precursor, which is silane (SiH₄), dichlorosilane (SiH₂Cl₂), silicon tetrafluoride (SiF₄), silicon tetrachloride (SiCl₄), methylsilane (CHsSiHs), disilane (Si₂H₆), or a combination thereof.

According to one embodiment, the hydrocarbon-based gas includes linear or branched organic compounds consisting of carbon and hydrogen. Non-limiting examples of the hydrocarbon-based gas include methane, ethane, propane, butane, ethylene, and acetylene.

When both the silane-based gas and the hydrocarbon-based gas are simultaneously provided, a volume ratio of the silane-based gas to the hydrocarbon-based gas may be in a range of 1:0.01 to 1:1 by volume%. For example, the volume ratio of the silane-based gas to the hydrocarbon-based gas may be in a range of 1:0.01 to 1:0.5 by volume%.

Since the silicon-containing amorphous coating layer is formed by codepositing a silane-based gas and a hydrocarbon-based gas, the larger the amount of the silane-based gas, the greater the diameter of the silicon particles in the coating layer, and the smaller the amount of the silane-based gas, the smaller the diameter of the silicon particles in the coating layer. In contrast, as the amount of the hydrocarbon-based gas is increased, the size of a space for the silicon particles is relatively reduced, and thus the diameter of the silicon particles may be decreased, and the smaller the amount of the hydrocarbon-based gas, the greater the diameter of the silicon particles. As such, the diameter of the silicon particles included in the silicon-containing amorphous coating layer may be adjusted by the above method.

When the volume ratio of the silane-based gas to the hydrocarbon-based gas is within the above range, a carbon matrix capable of minimizing the volumetric expansion of silicon nanoparticles included in the silicon-containing amorphous coating layer may be included in the silicon-containing amorphous coating layer. Accordingly, a change in the volume of the negative electrode active material during charging and discharging is minimized, resulting in enhanced cycle characteristics.

According to one embodiment, the providing of the silicon-containing coating layer may be performed at a temperature of 400 ºC to 900 ºC. For example, the providing of the silicon-containing amorphous coating layer may be performed at a temperature of 500 ºC to 900 ºC, 600 ºC to 900 ºC, or 700 ºC to 900 ºC, but the present disclosure is not limited thereto, and the temperature may be selected according to the composition and thickness of a desired coating layer.

According to one embodiment, the carbon matrix may include amorphous carbon.

According to one embodiment, the carbon matrix may be included in an amount of 10 parts by weight to 60 parts by weight with respect to 100 parts by weight of the total of the silicon-containing amorphous coating layer.

According to one embodiment, the method may further include providing a carbon coating layer including amorphous carbon, after the providing of the silicon-containing amorphous coating layer.

For example, the providing of the carbon coating layer may further include providing a carbon precursor and then heat-treating the same.

For example, the heat treatment may be performed at a temperature of 800 ºC to 1,100 ºC.

When the heat treatment is performed at the temperature of less than 800 ºC, pyrolysis process cannot occur sufficiently. When the heat treatment is performed at the temperature of greater than 1,100 ºC, crystalline SiC is formed due to a side reaction of a carbon precursor and nanoparticles, for example, silicon nanoparticles, and thus capacity is reduced.

The heat treatment may be performed for 1 hour or longer. When the heat treatment is performed for less than 1 hour, the carbon precursor is not sufficiently pyrolyzed, and thus it is difficult to form a uniform carbon coating layer.

The formation of the carbon coating layer through the pyrolysis process may be performed in an inert atmosphere. For example, the inert atmosphere may be an argon or nitrogen atmosphere. Through this, it is possible to form a uniform carbon coating layer.

A negative electrode for a lithium secondary battery, according to another embodiment includes: a negative electrode current collector; and a negative electrode active material layer disposed on at least one surface of the negative electrode current collector and including the above-described negative electrode active material.

The negative electrode may include a binder between the negative electrode current collector and the negative electrode active material layer or in the negative electrode active material layer. The binder will be described below.

The negative electrode and a lithium secondary battery including the same may be manufactured using the following methods.

The negative electrode includes the above-described negative electrode active material, and, for example, may be manufactured by preparing a negative electrode active material composition by mixing the above-described negative electrode active material, a binder, and optionally a conductive material in a solvent, and then molding the negative electrode active material composition into a certain shape, or applying the negative electrode active material composition on a current collector such as copper foil.

The binder used in the negative electrode active material composition is a component assisting in binding between a negative electrode active material and a conductive material and in binding of the active material to a current collector, may be included between the negative electrode current collector and the negative electrode active material layer or in the negative electrode active material layer, and may be added in an amount of about 1 part by weight to about 50 parts by weight with respect to 100 parts by weight of the negative electrode active material. For example, the binder may be added in an amount of about 1 part by weight to about 30 parts by weight, about 1 part by weight to about 20 parts by weight, or about 1 part by weight to about 15 parts by weight, with respect to 100 parts by weight of the negative electrode active material.

Non-limiting examples of the binder include polyvinylidene fluoride, polyvinylidene chloride, polybenzimidazole, polyimide, polyvinyl acetate, polyacrylonitrile, polyvinyl alcohol, carboxymethylcellulose (CMC), starch, hydroxypropylcellulose, regenerated cellulose, polyvinyl pyrrolidone, tetrafluoroethylene, polyethylene, polypropylene, polystyrene, polymethylmethacrylate, polyaniline, acrylonitrile butadiene styrene, phenol resin, epoxy resin, polyethyleneterephthalate, polytetrafluoroethylene, polyphenylene sulfide, polyamideimide, polyetherimide, polyethersulfone, polyamide, polyacetal, polyphenyleneoxide, polybutyleneterephthalate, ethylene-propylene-diene terpolymer (EPDM), sulfonated EPDM, styrene-butadiene rubber (SBR), fluorine rubber, and various copolymers.

The negative electrode may further include optionally a conductive material that provides a conductive path for the above-described negative electrode active material to further enhance electrical conductivity. The conductive material may be any conductive material that may be generally used in lithium batteries, and may be, for example, a conductive material including: a carbonaceous material such as carbon black, acetylene black, Ketjen black, or carbon fibers (e.g., vapor-grown carbon fibers); a metal-based material such as metal powder or metal fiber, which is formed of copper, nickel, aluminum, silver, or the like; a conductive polymer such as polyphenylene derivatives; or a mixture thereof.

The solvent may be N-methylpyrrolidone (NMP), acetone, water, or the like. The solvent is used in an amount of 1 part by weight to 10 parts by weight with respect to 100 parts by weight of the negative electrode active material. When the amount of the solvent is within the above range, an operation for forming an active material layer is easy.

In addition, the current collector is generally fabricated to a thickness of 3 µm to 500 µm. The current collector is not particularly limited as long as it does not cause a chemical change in the fabricated battery and has conductivity. For example, a material for forming the current collector may be a copper, a stainless steel, an aluminum, a nickel, a titanium, a calcined carbon, a copper or stainless steel that is surface-treated with a carbon, a nickel, a titanium, a silver, or the like, an aluminum-cadmium alloy, or the like. In addition, the current collector may have fine irregularities on a surface thereof so as to enhance adhesion between the negative electrode active material and the current collector, and may be used in any of various forms including a film, a sheet, a foil, a net, a porous structure, a foam, a non-woven fabric, and the like.

The prepared negative electrode active material composition may be directly coated onto a current collector to fabricate a negative electrode plate, or may be cast onto a separate support and a negative electrode active material film separated from the support is laminated on a copper foil current collector, to obtain a negative electrode plate. The negative electrode is not limited to the above-listed shapes and may have other shapes.

The negative electrode active material composition may be used in manufacturing an electrode of a lithium battery, and may also be used to manufacture a printable battery by printing the negative electrode active material composition on a flexible electrode substrate.

Next, a positive electrode is prepared.

For example, a positive electrode active material, a conductive material, a binder, and a solvent are mixed to prepare a positive electrode active material composition. The positive electrode active material composition is directly coated onto a metal current collector to thereby complete the manufacture of a positive electrode plate. In another embodiment, the positive electrode active material composition may be cast onto a separate support and a film separated from the support may be laminated on a metal current collector to thereby complete the manufacture of a positive electrode plate. The positive electrode is not limited to the above-described form, and may have a form other than the above-described form.

The positive electrode active material may be any lithium-containing metal oxide that is commonly used in the art without limitation. For example, the positive electrode active material may be LiCoO₂, LiMnₓO₂ₓ where x=1 or 2, LiNi₁₋ₓMnₓO₂ₓ where 0<x<1, LiNi_{1-x-y}CoₓMn_{y}O₂ where 0≤x≤0.5 and 0≤y≤0.5, LiFePO₄, or the like.

The above-listed compounds having a coating layer on their surfaces may also be used, or mixtures of the above-listed compounds and the compounds having a coating layer may be used. The coating layer may include a coating element compound such as an oxide, a hydroxide, an oxyhydroxide, an oxycarbonate, or a hydroxycarbonate of a coating element. The compounds constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. The coating layer may be formed using any coating method that does not adversely affect the physical properties of the positive electrode active material by using these coating elements in the above compounds (e.g., spray coating, dipping, or the like). The coating methods may be well understood by one of ordinary skill in the art, and thus a detailed description thereof is omitted.

The conductive material, the binder, and the solvent used in the positive electrode active material composition may be the same as those used in the negative electrode active material composition.

The amounts of the positive electrode active material, the conductive material, the binder, and the solvent are the same as those commonly used in lithium secondary batteries. At least one of the conductive material, the binder, and the solvent may be omitted depending on the use and configuration of a lithium battery.

Next, a separator to be inserted between the positive electrode and the negative electrode is prepared.

The separator may be any separator commonly used in lithium batteries. The separator may have low resistance to migration of ions in an electrolyte and have an excellent electrolyte-retaining ability. For example, the separator is selected from glass fiber, polyester, Teflon, polyethylene, polypropylene, polytetrafluoroethylene (PTFE), and a combination thereof, each of which may be a non-woven or woven fabric. For example, a rollable separator including polyethylene, polypropylene, or the like may be used for a lithium ion battery, and a separator with an excellent organic electrolyte solution-retaining ability may be used for a lithium ion polymer battery. For example, the separator may be manufactured using the following method.

A polymer resin, a filler, and a solvent are mixed to prepare a separator composition. The separator composition may be directly coated on an electrode, and then dried to fabricate the separator. In some embodiments, the separator composition may be cast on a support and then dried, and then a separator film separated from the support may be laminated on an electrode, thereby completing the fabrication of a separator.

The polymer resin used to manufacture the separator is not particularly limited and may be any material commonly used as a binder for electrode plates. For example, the polymer resin may be a vinylidenefluoride/hexafluoropropylene copolymer, polyvinylidene fluoride (PVDF), polyacrylonitrile, polymethylmethacrylate, a mixture thereof, or the like.

Next, an electrolyte is prepared.

For example, the electrolyte may be an organic electrolyte solution. For example, the electrolyte may be a solid. For example, the electrolyte may be boron oxide, lithium oxynitride, or the like, but the present disclosure is not limited thereto, and any electrolyte that may be used as a solid electrolyte in the art may be used. The solid electrolyte may be formed on the negative electrode using a method such as sputtering.

For example, the organic electrolyte solution may be prepared by dissolving a lithium salt in an organic solvent.

The organic solvent may be any organic solvent that may be used in the art. For example, the organic solvent may be propylene carbonate, ethylene carbonate, fluorinated ethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyl dioxolane, N,N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, a mixture thereof, or the like.

The lithium salt may be any lithium salt that may be used in the art. The lithium salt may be, for example, LiPF₆, LiBF₄, LiSbF₆, LiAsF₆, LiClO₄, LiCFsSOs, Li(CF₃SO₂)₂N, LiC₄F₉SO₃, LiAlO₂, LiAlCl₄, LiN(CₓF₂ₓ₊₁SO₂)(C_{y}F_{2y+1}SO₂) where x and y are natural numbers, LiCI, Lil, a mixture thereof, or the like.

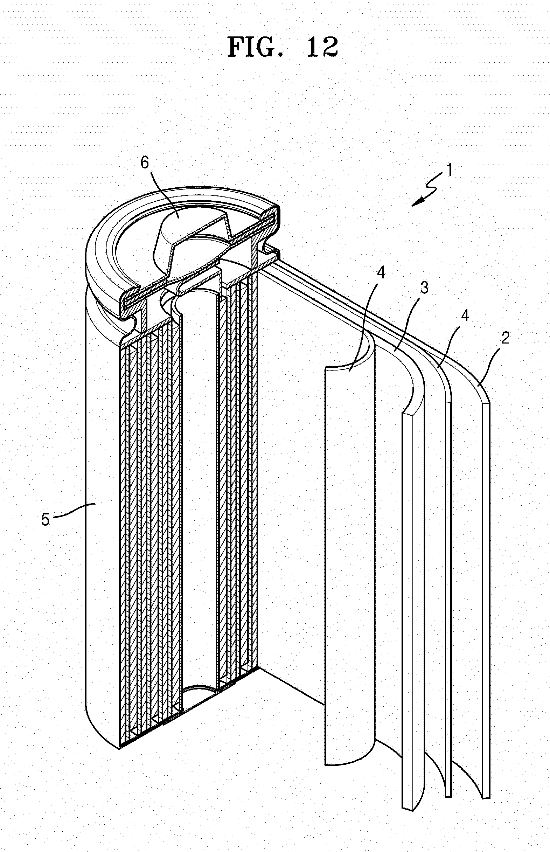

As illustrated in FIG. 12, a lithium battery 1 includes a positive electrode 3, a negative electrode 2, and a separator 4. The above-described positive electrode 3, the negative electrode 2, and the separator 4 are wound or folded and accommodated in a battery case 5. Subsequently, an electrolyte is injected into the battery case 5 and the battery case 5 is sealed by a cap assembly 6 to thereby complete the manufacture of the lithium battery 1. The battery case 5 may have a cylindrical, rectangular, or thin-film form, or the like. For example, the lithium battery 1 may be a thin-film-type battery. The lithium battery 1 may be a lithium ion battery.

A separator may be disposed between the positive electrode and the negative electrode to form a battery assembly. A plurality of battery assemblies may be stacked in a bi-cell structure and impregnated with an organic electrolyte solution, and the resultant structure may be put into a pouch and hermetically sealed to thereby complete the manufacture of a lithium-ion polymer battery.

In addition, the battery assemblies may be stacked to form a battery pack, and such a battery pack may be used in any device requiring high capacity and high power output. For example, the battery pack may be used in notebook computers, smartphones, electric vehicles, and the like.

In addition, the lithium secondary battery exhibits excellent lifespan characteristics and rate characteristics, and thus may be used in electric vehicles (EVs). For example, the lithium secondary battery may be used in hybrid vehicles such as plug-in hybrid EVs (PHEVs). In addition, the lithium secondary battery may be used in fields requiring a large amount of power storage. For example, the lithium secondary battery may be used in electric bikes, power tools, and the like.

The present disclosure will now be described in further detail with reference to the following preparation examples, examples, and comparative examples. However, these examples are provided for illustrative purposes only and are not intended to limit the scope of the present disclosure.

### (Preparation of Negative electrode active material)

### Preparation Example 1

Spherical graphite was prepared as a carbon-based material, followed by vapor chemical deposition of SiH₄ (g) and ethylene in a volume ratio of 10: 1.6 at 475 ºC and 50 sccm for 40 minutes, thereby obtaining a negative electrode active material having a 20 nm-thick silicon-containing amorphous coating layer formed on a surface of the carbon-based material.

At this time, in the negative electrode active material, the volume ratio occupied by the carbon matrix dispersed in the silicon-containing amorphous coating layer was about 30%.

### Preparation Example 2

Spherical graphite was prepared as a carbon-based material, followed by vapor chemical deposition of SiH₄ (g) at 475 ºC and 50 sccm for 20 minutes, thereby obtaining a negative electrode active material having a 15 nm-thick silicon coating layer formed on a surface of the carbon-based material.

### Preparation Example 3

Spherical graphite was prepared as a carbon-based material, followed by vapor chemical deposition of SiH₄ (g) and ethylene in a volume ratio of 10: 1.6 at 475 ºC and 50 sccm for 20 minutes, thereby forming a 20 nm-thick silicon-containing amorphous coating layer on a surface of the carbon-based material.

Subsequently, 10 g of the carbon-based material having the silicon-containing amorphous coating layer and 1.5 g of a pitch carbon source were put into a mixer, mixed at 25 ºC for 120 minutes, and then heat-treated at 900 ºC for 120 minutes, thereby obtaining a negative electrode active material including the silicon-containing amorphous coating layer and a carbon coating layer on the carbon-based material.

At this time, in the negative electrode active material, the volume ratio occupied by the carbon matrix dispersed in the silicon-containing amorphous coating layer was about 30%.

### Preparation Example 4

Spherical graphite was prepared as a carbon-based material, followed by vapor chemical deposition of SiH₄ (g) at 475 ºC and 50 sccm for 20 minutes, thereby forming a 15 nm-thick silicon coating layer on a surface of the carbon-based material.

Subsequently, 10 g of the carbon-based material having the silicon coating layer and 1.5 g of a pitch carbon source were put into a mixer, mixed at 25 ºC for 120 minutes, and then heat-treated at 900 ºC for 120 minutes, thereby obtaining a negative electrode active material including the silicon coating layer and a carbon coating layer on the carbon-based material.

### Preparation Example 5

Spherical graphite was prepared as a carbon-based material, followed by vapor chemical deposition of SiH₄ (g) and ethylene in a volume ratio of 10: 0.4 at 475 ºC and 50 sccm for 20 minutes, thereby forming a 20 nm-thick silicon-containing amorphous coating layer on a surface of the carbon-based material.

Subsequently, 10 g of the carbon-based material having the silicon-containing amorphous coating layer and 1.5 g of a pitch carbon source were put into a mixer, mixed at 25 ºC for 120 minutes, and then heat-treated at 900 ºC for 120 minutes, thereby obtaining a negative electrode active material including the silicon-containing amorphous coating layer and a carbon coating layer on the carbon-based material.

At this time, in the negative electrode active material, the volume ratio occupied by an amorphous matrix dispersed in the silicon-containing amorphous coating layer was about 7%.

### Preparation Example 6

Spherical graphite was prepared as a carbon-based material, followed by vapor chemical deposition of SiH₄ (g) and ethylene in a volume ratio of 10: 0.8 at 475 ºC and 50 sccm for 20 minutes, thereby forming a 20 nm-thick silicon-containing amorphous coating layer on a surface of the carbon-based material.

Subsequently, 10 g of the carbon-based material having the silicon-containing amorphous coating layer and 1.5 g of a pitch carbon source were put into a mixer, mixed at 25 ºC for 120 minutes, and then heat-treated at 900 ºC for 120 minutes, thereby obtaining a negative electrode active material including the silicon-containing amorphous coating layer and a carbon coating layer on the carbon-based material.

At this time, in the negative electrode active material, the volume ratio occupied by an inert matrix dispersed in the silicon-containing amorphous coating layer was about 13%.

### Preparation Example 7

Spherical graphite was prepared as a carbon-based material, followed by vapor chemical deposition of SiH₄ (g) and ethylene in a volume ratio of 10: 1.2 at 475 ºC and 50 sccm for 20 minutes, thereby forming a 20 nm-thick silicon-containing amorphous coating layer on a surface of the carbon-based material.

Subsequently, 10 g of the carbon-based material having the silicon-containing amorphous coating layer and 1.5 g of a pitch carbon source were put into a mixer, mixed at 25 ºC for 120 minutes, and then heat-treated at 900 ºC for 120 minutes, thereby obtaining a negative electrode active material including the silicon-containing amorphous coating layer and a carbon coating layer on the carbon-based material.

At this time, in the negative electrode active material, the volume ratio occupied by an inert matrix dispersed in the silicon-containing amorphous coating layer was about 20%.

### Preparation Example 8

Spherical graphite was prepared as a carbon-based material, followed by vapor chemical deposition of SiH₄ (g) and ethylene in a volume ratio of 10: 1.6 at 475 ºC and 50 sccm for 20 minutes, thereby forming a 20 nm-thick silicon-containing amorphous coating layer on a surface of the carbon-based material.

Subsequently, 10 g of the carbon-based material having the silicon-containing amorphous coating layer and 1.5 g of a pitch carbon source were put into a mixer, mixed at 25 ºC for 120 minutes, and then heat-treated at 900 ºC for 120 minutes, thereby obtaining a negative electrode active material including the silicon-containing amorphous coating layer and a carbon coating layer on the carbon-based material.

At this time, in the negative electrode active material, the volume ratio occupied by an inert matrix dispersed in the silicon-containing amorphous coating layer was about 25%.

### Preparation Example 9

Spherical graphite was prepared as a carbon-based material, followed by vapor chemical deposition of SiH₄ (g) and ethylene in a volume ratio of 10: 2 at 475 ºC and 50 sccm for 20 minutes, thereby forming a 20 nm-thick silicon-containing amorphous coating layer on a surface of the carbon-based material.

Subsequently, 10 g of the carbon-based material having the silicon-containing amorphous coating layer and 1.5 g of a pitch carbon source were put into a mixer, mixed at 25 ºC for 120 minutes, and then heat-treated at 900 ºC for 120 minutes, thereby obtaining a negative electrode active material including the silicon-containing amorphous coating layer and a carbon coating layer on the carbon-based material.

At this time, in the negative electrode active material, the volume ratio occupied by an inert matrix dispersed in the silicon-containing amorphous coating layer was about 30%.

### Preparation Example 10

Spherical graphite was prepared as a carbon-based material, followed by vapor chemical deposition of SiH₄ (g) and ethylene in a volume ratio of 10: 4 at 475 ºC and 50 sccm for 20 minutes, thereby forming a 20 nm-thick silicon-containing amorphous coating layer on a surface of the carbon-based material.

Subsequently, 10 g of the carbon-based material having the silicon-containing amorphous coating layer and 1.5 g of a pitch carbon source were put into a mixer, mixed at 25 ºC for 120 minutes, and then heat-treated at 900 ºC for 120 minutes, thereby obtaining a negative electrode active material including the silicon-containing amorphous coating layer and a carbon coating layer on the carbon-based material.

At this time, in the negative electrode active material, the volume ratio occupied by an inert matrix dispersed in the silicon-containing amorphous coating layer was about 50%.

### Preparation Example 11

Spherical graphite was prepared as a carbon-based material, followed by vapor chemical deposition of SiH₄ (g) and ethylene in a volume ratio of 10: 5 at 475 ºC and 50 sccm for 20 minutes, thereby forming a 20 nm-thick silicon-containing amorphous coating layer on a surface of the carbon-based material.

Subsequently, 10 g of the carbon-based material having the silicon-containing amorphous coating layer and 1.5 g of a pitch carbon source were put into a mixer, mixed at 25 ºC for 120 minutes, and then heat-treated at 900 ºC for 120 minutes, thereby obtaining a negative electrode active material including the silicon-containing amorphous coating layer and a carbon coating layer on the carbon-based material.

At this time, in the negative electrode active material, the volume ratio occupied by an inert matrix dispersed in the silicon-containing amorphous coating layer was about 70%.

### (Crystal Analysis of First Coating Layer)

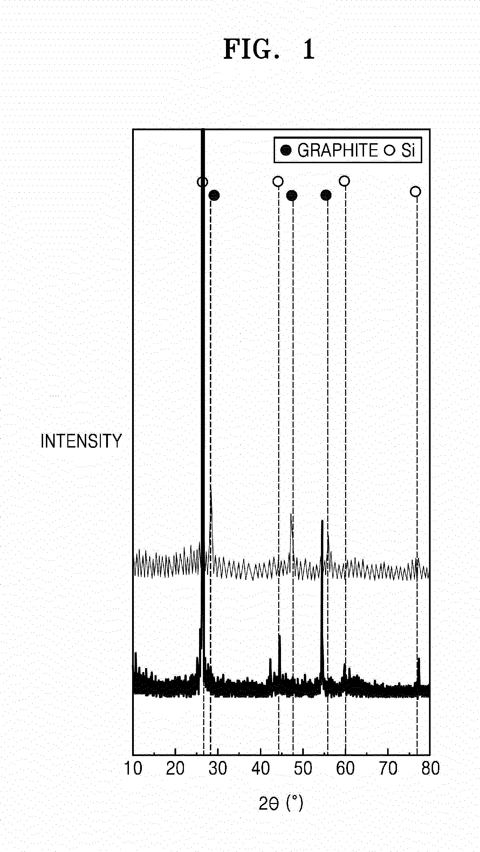

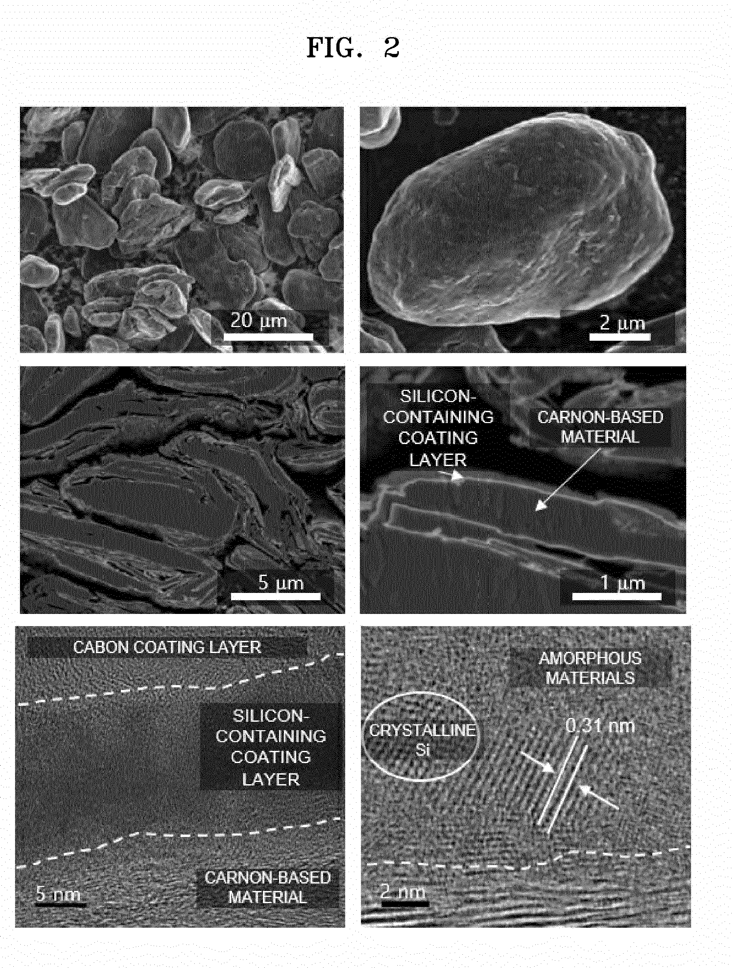

The negative electrode active material prepared according to Preparation Example 2 and the negative electrode active material prepared according to Preparation Example 3 were analyzed using an X-ray diffraction analyzer, and the results thereof are shown in FIG. 1. In addition, the surfaces and cross-sections of the negative electrode active materials were photographed using a SEM and a TEM, and the acquired images are shown in FIG. 2.

Referring to FIG. 1, it can be seen that a silicon crystal peak clearly appears in the negative electrode active material of Preparation Example 2 including the silicon coating layer formed from a silane gas, whereas the silicon crystal peak is not distinct in the negative electrode active material of Preparation Example 3 including the silicon-containing amorphous coating layer formed from a cogas of silane and ethylene. This means that there is no silicon crystal in the negative electrode active material of Preparation Example 3, or the crystal size is too small to be analyzed using an analyzer.

Referring to FIG. 2, it can be confirmed that a silicon-containing amorphous coating layer is present on the surface of the carbon-based material of the negative electrode active material prepared according to Preparation Example 3, and it can be confirmed that such a silicon-containing amorphous coating layer is present such that crystalline silicon particles are distributed in an amorphous matrix material. Specifically, the upper left and upper right images are SEM and TEM images showing the surface of the negative electrode active material prepared according to Preparation Example 3. The middle left and middle right images are SEM and TEM images showing the cross-section of the negative electrode active material, from which it is clearly confirmed that a first coating layer is present. The lower left and lower right images are enlarged SEM and TEM images showing the boundary surface of the first coating layer in the negative electrode active material, and it can be confirmed that the first coating layer is amorphous and silicon nanoparticles are present therein.

### (Combined Analysis of Silicon-containing Amorphous Coating Layer)

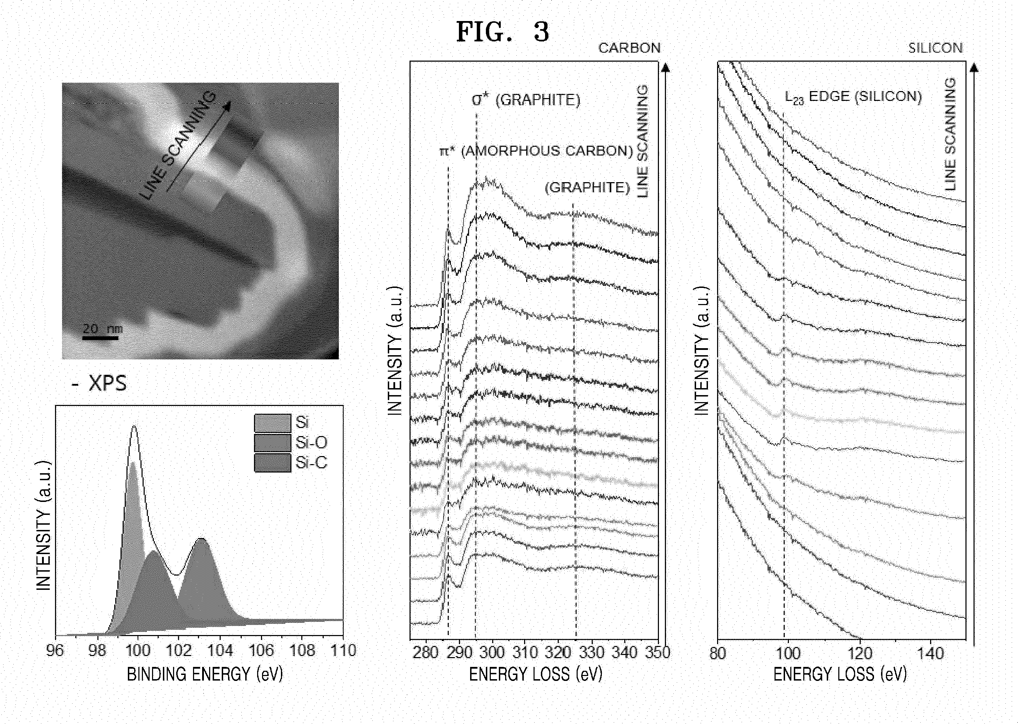

Electron energy loss spectroscopy (EELS) line scanning was performed on a region from the carbon-based material to the outermost carbon coating layer via the silicon-containing amorphous coating layer in the negative electrode active material prepared according to Preparation Example 3, and the results thereof are shown in FIG. 3.

Referring to FIG. 3, it can be confirmed that, in the negative electrode active material prepared according to Preparation Example 3, amorphous carbon and silicon are present in the silicon-containing amorphous coating layer on the surface of the carbon-based material. In addition, a SiC peak is confirmed through XPS analysis, from which it can be confirmed that Si particles, amorphous carbon, and SiC are included in the silicon-containing amorphous coating layer.

### (Elemental Content Analysis of Silicon-containing Amorphous Coating Layer)

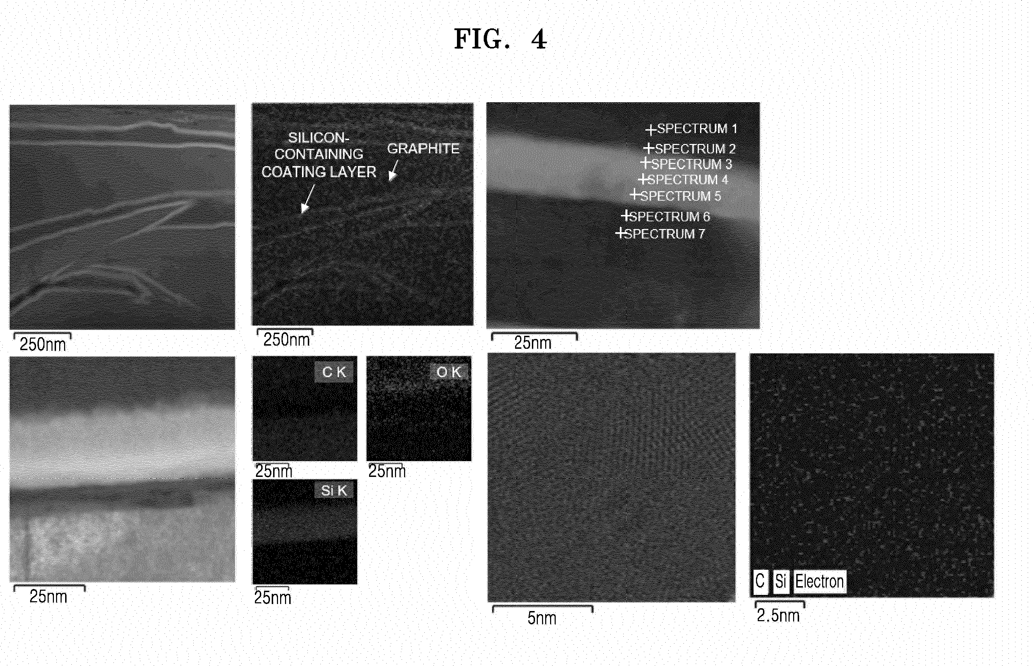

Elemental Content Analysis was performed on the region from the carbon-based material to the outermost coating layer via the silicon-containing amorphous coating layer in the negative electrode active material prepared according to Preparation Example 3 by using TEM and EDS equipment. The results thereof are shown in FIG. 4 and Table 1 below.

**[Table 1]**

| | Wt% | |
|---|---|---|
| | Silicon | Carbon |
| Spectrum 1 | 9.07 | 90.9 |
| Spectrum 2 | 26.9 | 73.0 |
| Spectrum 3 | **89.0** | **10.9** |
| Spectrum 4 | **91.1** | **8.8** |
| Spectrum 5 | **90.2** | **9.7** |
| Spectrum 6 | 4.26 | 94.4 |
| Spectrum 7 | 3.0 | 97.0 |

As shown in FIG. 4 and Table 1, it can be seen that the silicon-containing amorphous coating layer includes both silicon atoms and carbon atoms. It was also confirmed that the weight ratio of carbon atoms is much higher than that of silicon atoms at the boundary surface of the silicon-containing amorphous coating layer, whereas the weight ratio of silicon atoms is much higher than carbon atoms in the silicon-containing amorphous coating layer. This suggests that the silicon atoms are mostly distributed in the silicon-containing amorphous coating layer.

### (Manufacture of Half-Cells)

### Example 1

The negative electrode active material of Preparation Example 1, a conductive material, and a binder were mixed in a ratio of 95.8:1:3.2 to prepare a slurry. In this case, Super P was used as the conductive material, and carboxymethylcellulose (CMC) and styrene-butadiene-rubber (SBR) were used as the binder.

The slurry was uniformly applied on copper foil, followed by drying in an oven at 80 ºC for about 2 hours, roll pressing, and additional drying in a vacuum oven at 110 ºC for about 12 hours to thereby complete the manufacture of a negative electrode.

The manufactured negative electrode was used as a working electrode, Li foil was used as a counter electrode, a polyethylene membrane was inserted as a separator between the negative electrode and the counter electrode, and a liquid electrolyte solution prepared by adding 10.0 wt% of FEC to a mixed solvent of EC/EMC/DEC in a volume ratio of 3:5:2 and adding 1.3 M LiPF₆ as a lithium salt thereto was used, thereby completing the manufacture of a CR2016 half-cell according to a commonly known process.

### Examples 2 to 6

Half-cells were manufactured in the same manner as in Example 1, except that the negative electrode active materials of Preparation Examples 3, 6, 8, 10, and 11 were respectively used instead of the negative electrode active material of Preparation Example 1.

### Comparative Examples 1 to 3

Half-cells were manufactured in the same manner as in Example 1, except that the negative electrode active materials of Preparation Examples 2, 4, and 5 were respectively used instead of the negative electrode active material of Preparation Example 1.

### Evaluation Example 1: Evaluation of Electrochemical Characteristics

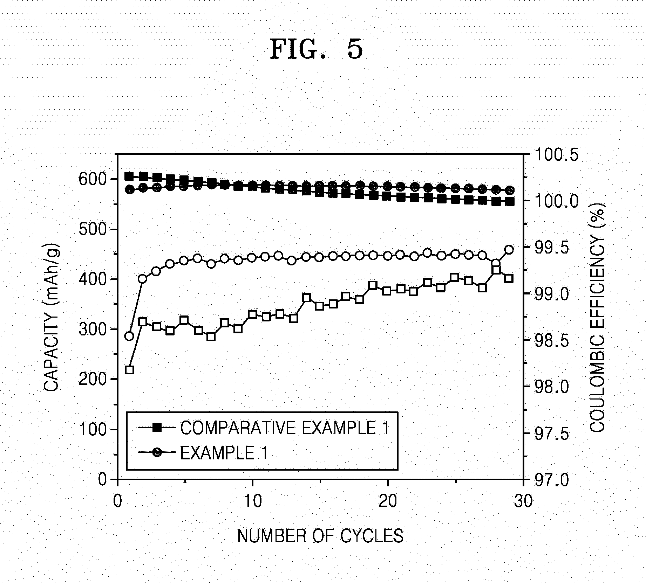

Each of the half-cells manufactured according to Example 1 and Comparative Example 1 started to be charged at 25 ºC at a charge rate of 0.1 C-rate until the voltage reached 0.01 V such that charging was performed at a constant current until the voltage reached a certain voltage, and then charged at a constant voltage until the current reached a certain current (0.01 C) or less. Subsequently, each half-cell was discharged at a constant current of 0.1 C-rate until the voltage reached 1.5 V. After this cycle of charging and discharging was performed twice, 30 cycles of charging and discharging were consecutively performed at a charge/discharge rate of 0.5 C-rate and in a voltage range of 0.01 V to 1.5 V. Some of the charge/discharge experimental results are shown in Table 2 below, and a graph of the charge/discharge experimental results is shown in FIG. 5.

### Initial coulombic efficiency was calculated by Equation 1 below.

Initial coulombic efficiency [%] = [discharge capacity at 1st cycle/charge capacity at 3rd cycle] × 100

**[Table 2]**

| | Capacity [mAh/g] | Initial coulombic efficiency [%] |
|---|---|---|
| Example 1 | 598 | 92 |
| Comparative Example 1 | 610 | 91.7 |

As shown in Table 1, the half-cells of Example 1 and Comparative Example 1 had substantially the same capacity. However, referring to FIG. 5, it can be confirmed that the half-cell of Example 1 exhibited remarkably increased Coulombic efficiency as a plurality of cycles of charging and discharging proceeded, and also exhibited superior capacity to that of Comparative Example 1 after 30 cycles of charging and discharging. These results are considered attributed to the effect of enhancing cycle characteristics by suppressing the deintercalation of silicon particles from a negative electrode according to a change in the volume of the silicon particles, in the case of Example 1.

### Evaluation Example 2: Evaluation of Electrochemical Characteristics (2)

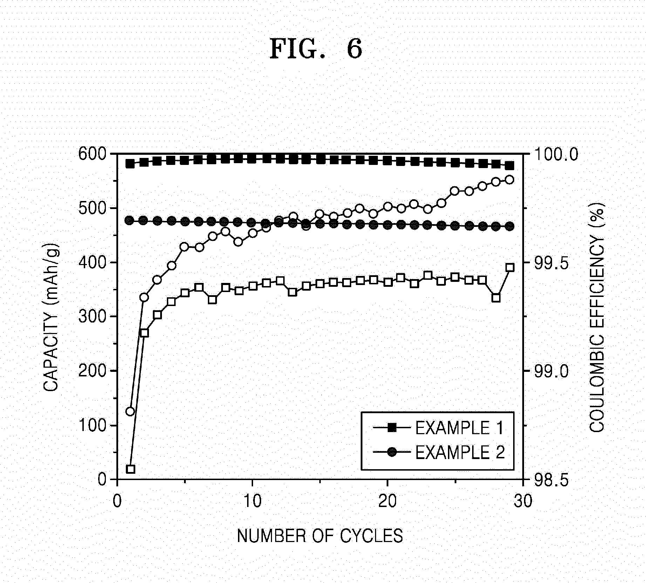

A charging/discharging experiment was performed on the half-cells manufactured according to Examples 1 and 2 in the same manner as in Evaluation Example 1, some of the results thereof are shown in Table 3 below, and a graph of the charge/discharge experimental results is illustrated in FIG. 6.

**[Table 3]**

| | Capacity [mAh/g] | Initial coulombic efficiency [%] |
|---|---|---|
| Example 2 | 489 | 90.5 |
| Example 1 | 598 | 92 |

As shown in Table 2, the half-cell of Example 2 exhibited slightly deteriorated capacity and initial Coulombic efficiency as compared to those of Example 1. Referring to FIG. 6, however, it can be confirmed that the half-cell of Example 2 exhibited remarkably enhanced Coulombic efficiency as the cycle of charging and discharging proceeds. These results are considered attributed to the fact that, in Example 2, by including the carbon coating layer, electrical conductivity is enhanced, and direct contact of an electrolyte solution with an active material can be prevented, and the additional outermost carbon coating layer helps suppress the volumetric expansion of silicon particles, by the silicon-based inert matrix.

### Evaluation Example 3: Differential Capacity Analysis

Each of the half-cells manufactured according to Examples 3 to 6 and Comparative Examples 2 and 3 started to be charged at 25 ºC at a charge rate of 0.1 C-rate until the voltage reached 0.005 V such that charging was performed at a constant current until the voltage reached a certain voltage, and then charged at a constant voltage until the current reached a certain current (0.01 C) or less. Subsequently, each half-cell was discharged at a constant current of 0.1 C-rate until the voltage reached 1.5 V.

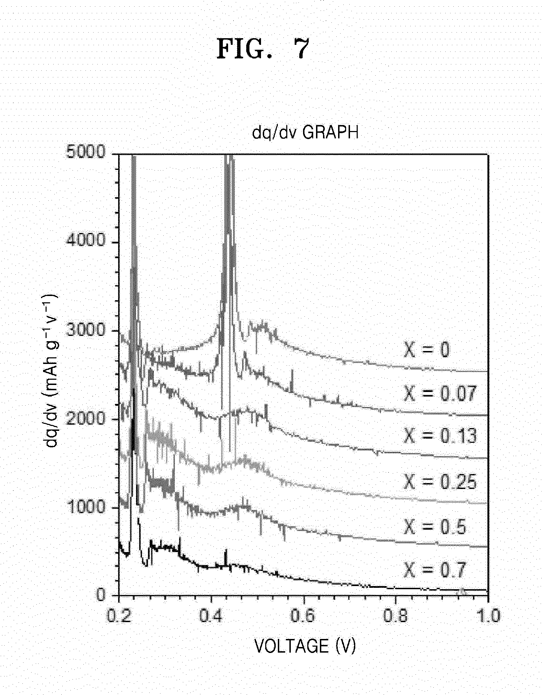

A differential capacity graph obtained by differentiating the voltage profile obtained therefrom is illustrated in FIG. 7. Referring to FIG. 7, the presence or absence of a 0.43 V peak can be confirmed. The 0.43 V peak means that lithium reacts with silicon to form a Li_{3.75}Si phase. The Li_{3.75}Si phase means the largest amount of lithium that can react with silicon, and in this case, the expansion rate of silicon theoretically reaches 300%, causing fatal performance degradation. However, if the Li_{3.75}Si phase is not formed, the expansion rate is reduced, which may contribute to performance improvement.

### Evaluation Example 4: Measurement of Silicon Nanoparticles in Silicon-containing Amorphous Coating Layer

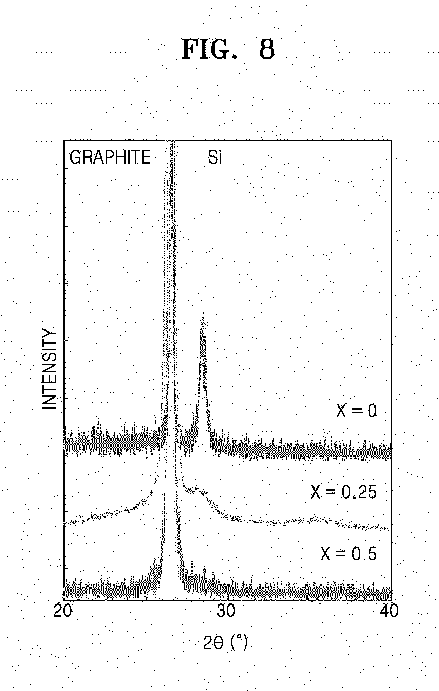

XRD analysis was performed on the silicon-containing amorphous coating layer in each of the negative electrode active materials obtained in Preparation Examples 4, 8, and 10, and XRD data are shown in FIG. 8. In addition, silicon crystals in the silicon-containing amorphous coating layer were analyzed on the basis of the XRD data, and the Si crystal size was calculated through a Scherrer equation.

**[Table 4]**

| | Diameter (nm) of Si particles |
|---|---|
| Preparation Example 2 (x=0) | 20 |
| Preparation Example 8 (x=0.25) | 3-5 |
| Preparation Example 10 (x=0.5) | <2 |

### (Manufacture of Full-Cells)

### Example 7

### Manufacture of Negative Electrode

The negative electrode active material prepared according to Preparation Example 3, super. P as a conductive agent, CMC as a thickener, and SBR as a binder were mixed in a weight ratio of 96:1 :1.5:1.5 to prepare a slurry. The slurry was applied on a copper current collector having a thickness of 18 µm using a general method. The current collector with the slurry applied thereon was dried at room temperature, followed by secondary drying at 120 ºC, roll pressing, and punching, thereby completing the manufacture of a negative electrode to be applied to cells.

### Manufacture of Positive Electrode

A mixture obtained by mixing a lithium cobalt oxide (LCO) positive electrode active material, a carbon conductive agent (super.P), and polyvinylidenefluoride (PVdF) in a weight ratio of 94:3:3 was mixed with N-methylpyrrolidone (NMP) through a homogenizer to prepare a positive electrode active material slurry. The positive electrode active material slurry was applied on a 15 µm-thick aluminum current collector to a thickness of about 120 µm using a doctor blade, followed by drying at room temperature, further drying at 120 ºC, and roll pressing, thereby completing the manufacture of a positive electrode having a positive electrode active material layer disposed on the current collector.

### Manufacture of Lithium Secondary Battery

The negative electrode was wound in a circular shape of 16 mm, the positive electrode was wound in a circular shape of 15 mm, and then a separator was positioned between the positive electrode and the negative electrode to thereby complete the manufacture of a 2032-type coin full-cell.

As a separator, a 14 µm-thick polyethylene-polypropylene copolymer separator was used.

An electrolyte solution obtained by dissolving 1.3 M LiPF₆ in a mixed solvent of ethylene carbonate (EC)/diethylene carbonate (DEC)/fluorinated ethylene carbonate (FEC) in a volume ratio of 2:6:2 was used as an electrolyte.

### Examples 8 to 10

2032-type coin full-cells were manufactured in the same manner as in Example 7, except that the negative electrode active materials prepared according to Preparation Examples 7 to 9 were respectively used instead of the negative electrode active material of Preparation Example 3.

### Comparative Example 4

A 2032-type coin full-cell was manufactured in the same manner as in Example 7, except that the negative electrode active material prepared according to Preparation Example 4 was used instead of the negative electrode active material of Preparation Example 3.

### Evaluation Example 5: Evaluation of Lifespan Characteristics

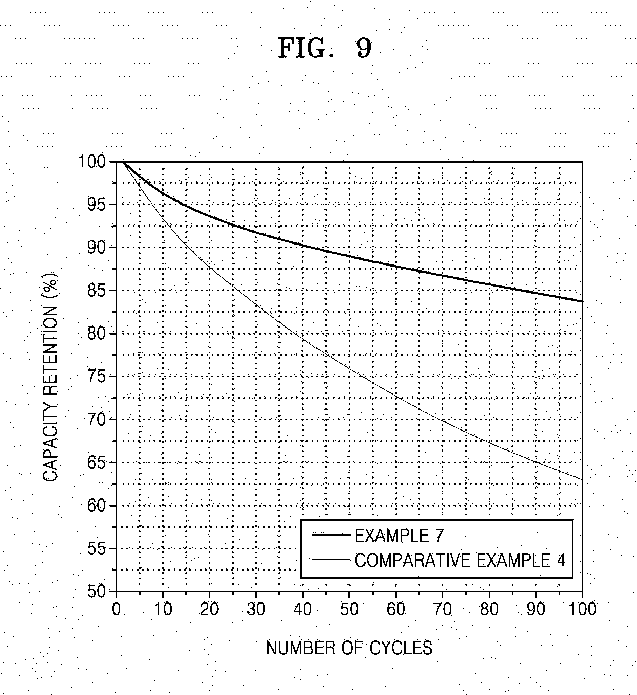

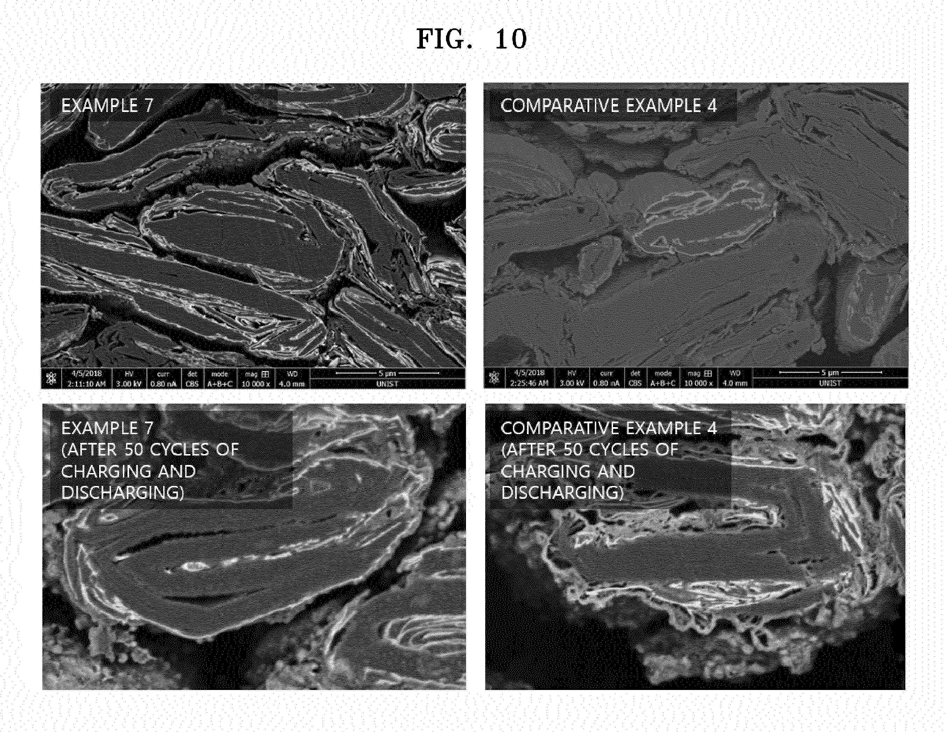

Each of the full-cells manufactured according to Example 7 and Comparative Example 4 started to be charged at 25 ºC at a charge rate of 0.2 C-rate until the voltage reached 4.2 V such that charging was performed at a constant current until the voltage reached a certain voltage, and then charged at a constant voltage until the current reached a certain current (0.05 C) or less. Subsequently, each full-cell was discharged at a constant current of 0.2 C-rate until the voltage reached 2.5 V. In a charge/discharge cycle, charging was performed at a constant current of 0.5 C-rate until the voltage reached a certain voltage, and then charging was performed at a constant voltage until the current reached a certain current (0.1 C) or less. Discharging was performed at 1 C-rate until the voltage reached 2.7 V. This cycle of charging and discharging was repeated 100 times. In addition, discharge capacity at each cycle with respect to initial formation capacity was calculated, and the results thereof are illustrated in FIG. 9. In addition, after 50 cycles of charging and discharging, the negative electrodes were cut to observe the cross-sections thereof. The cross-sections of the negative electrodes are illustrated in FIG. 10.

Referring to FIG. 9, it can be seen that the negative electrode active material including a silicon coating layer exhibited a capacity retention rate of 64% with respect to initial formation capacity after 100 cycles of charging and discharging, whereas the negative electrode active material including a silicon-containing amorphous coating layer exhibited a capacity retention rate of 84%, showing an excellent effect of enhancing lifespan characteristics.

Referring to FIG. 10, it can also be confirmed that, in 50 cycles of charging and discharging, cracks in the negative electrode active material including a silicon coating layer were found, whereas almost no cracks were found in the negative electrode active material including a silicon-containing amorphous coating layer, and stress due to volumetric expansion was sufficiently reduced in the charging/discharging process.

### Evaluation Example 6: Evaluation of Lifespan Characteristics (II)

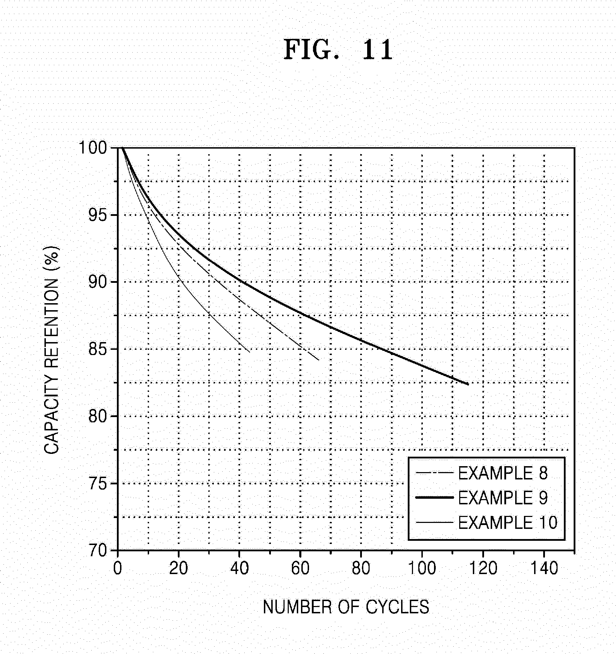

Each of the full-cells manufactured according to Examples 8 to 10 started to be charged at 25 ºC at a charge rate of 0.2 C-rate until the voltage reached 4.2 V such that charging was performed at a constant current until the voltage reached a certain voltage, and then charged at a constant voltage until the current reached a certain current (0.05 C) or less. Subsequently, each full-cell was discharged at a constant current of 0.2 C-rate until the voltage reached 2.5 V. In a charge/discharge cycle, charging was performed at a constant current of 0.5 C-rate until the voltage reached a certain voltage, and then charging was performed at a constant voltage until the current reached a certain current (0.1 C) or less. Discharging was performed at 1 C-rate until the voltage reached 2.7 V. This cycle of charging and discharging was repeated 100 times. Initial formation capacity and efficiency are shown in the following table, capacity retention according to the cycle of charging and discharging was measured, and the results thereof are illustrated in FIG. 11.

**[Table 5]**

| | Capacity [mAh/g] | Initial efficiency [%] |
|---|---|---|
| Example 8 | 496 | 90.5 |
| Example 9 | 508 | 90.0 |
| Example 10 | 499.5 | 90.2 |

As shown in the table, all of the cases of Examples 8 to 10 exhibited good initial formation efficiency. Meanwhile, the case of Example 9 exhibited the highest capacity. In addition, referring to FIG. 11, as the cycle of charging and discharging proceeds, the case of Example 9 exhibited excellent capacity retention, as compared to Examples 8 and 10.

## Claims

1. A negative electrode active material for a lithium secondary battery, comprising:
a carbon-based material being spherical graphite; and
a silicon-containing amorphous coating layer disposed on the carbon-based material and represented by SiC_{X} where
0.07<x<0.7,
wherein the silicon-containing amorphous coating layer comprises silicon particles having a diameter of 5 nm or less.

2. The negative electrode active material of claim 1, wherein, in SiCₓ, 0.2<x<0.5.

3. The negative electrode active material of claim 1, wherein the silicon particles comprise crystalline silicon particles.

4. The negative electrode active material of claim 1, wherein the silicon-containing amorphous coating layer shows no peak at 0.43 V in differential capacity analysis (dQ/dV).

5. The negative electrode active material of claim 1, wherein the silicon particles have a diameter of 3 nm to 5 nm.

6. The negative electrode active material of claim 1, wherein the silicon-containing amorphous coating layer comprises silicon particles and a carbon matrix,
wherein the carbon matrix is included in an amount of 10 parts by weight to 60 parts by weight with respect to 100 parts by weight of a total of the silicon-containing amorphous coating layer.

7. The negative electrode active material of claim 1, wherein the silicon-containing amorphous coating layer has a thickness of 5 nm to 4,000 nm.

8. The negative electrode active material of claim 1, wherein the silicon-containing amorphous coating layer is partially or completely disposed on a surface of the carbon-based material.

9. The negative electrode active material of claim 1, wherein the carbon-based material comprises natural graphite, artificial graphite, hard carbon, soft carbon, or a combination thereof.

10. The negative electrode active material of claim 1, wherein a carbon coating layer comprising amorphous carbon is disposed on the silicon-containing amorphous coating layer.

11. A method of preparing a negative electrode active material for a lithium secondary battery, the method comprising:
preparing a carbon-based material being spherical graphite; and
providing, on a surface of the carbon-based material, a silicon-containing amorphous coating layer represented by SiC_{X} where 0.07<x<0.7,
wherein the providing of the silicon-containing amorphous coating layer comprises providing a silane-based gas and a hydrocarbon-based gas and is performed at a temperature of 400 ºC to 900 ºC, and
wherein a volume ratio of the silane-based gas to the hydrocarbon-based gas is in a range of 1:0.01 to 1:1 by volume%.

12. The method of claim 11, wherein the silane-based gas and the hydrocarbon-based gas are sequentially or simultaneously provided.

13. The method of claim 11, further comprising providing a carbon coating layer comprising amorphous carbon, after the providing of the silicon-containing amorphous coating layer.

14. A lithium secondary battery comprising:
a negative electrode comprising the negative electrode active material according to any one of claims 1 to 10;
a positive electrode; and
an electrolyte.

## Patentansprüche

1. Aktives Material für eine negative Elektrode für eine Lithium-Sekundärbatterie, umfassend:
ein kohlenstoffbasiertes Material, das ein kugelförmiger Graphit ist; und
eine siliziumhaltige amorphe Beschichtungsschicht, die auf dem kohlenstoffbasierten Material angeordnet ist und durch SiCₓ dargestellt wird, wobei 0,07<x<0,7,
wobei die siliziumhaltige amorphe Beschichtungsschicht Siliziumpartikel umfasst, die einen Durchmesser von 5 nm oder weniger aufweisen.

2. Aktives Material für eine negative Elektrode nach Anspruch 1, wobei in SiCₓ, 0,2<x<0,5.

3. Aktives Material für eine negative Elektrode nach Anspruch 1, wobei die Siliziumpartikel kristalline Siliziumpartikel umfassen.

4. Aktives Material für eine negative Elektrode nach Anspruch 1, wobei die siliziumhaltige amorphe Beschichtungsschicht in einer Differenzkapazitätsanalyse (dQ/dV) keinen Peak bei 0,43 V vorzeigt.

5. Aktives Material für eine negative Elektrode nach Anspruch 1, wobei die Siliziumpartikel einen Durchmesser von 3 nm bis 5 nm aufweisen.

6. Aktives Material für eine negative Elektrode nach Anspruch 1, wobei die siliziumhaltige amorphe Beschichtungsschicht Siliziumpartikel und eine Kohlenstoffmatrix umfasst,
wobei die Kohlenstoffmatrix in einer Menge von 10 Gewichtsteilen bis 60 Gewichtsteilen in Bezug auf 100 Gewichtsteile einer gesamten siliziumhaltigen amorphen Beschichtungsschicht eingeschlossen ist.

7. Aktives Material für eine negative Elektrode nach Anspruch 1, wobei die siliziumhaltige amorphe Beschichtungsschicht eine Dicke von 5 nm bis 4.000 nm aufweist.

8. Aktives Material für eine negative Elektrode nach Anspruch 1, wobei die siliziumhaltige amorphe Beschichtungsschicht teilweise oder vollständig auf einer Oberfläche des kohlenstoffbasierten Materials angeordnet ist.

9. Aktives Material für eine negative Elektrode nach Anspruch 1, wobei das kohlenstoffbasierte Material natürlichen Graphit, künstlichen Graphit, Hartkohlenstoff, Weichkohlenstoff oder eine Kombination davon umfasst.

10. Aktives Material für eine negative Elektrode nach Anspruch 1, wobei eine Kohlenstoffbeschichtungsschicht, umfassend amorphen Kohlenstoff, auf der siliziumhaltigen amorphen Beschichtungsschicht angeordnet ist.

11. Verfahren zum Herstellen eines aktiven Materials für eine negative Elektrode für eine Lithium-Sekundärbatterie, das Verfahren umfassend:
Herstellen eines kohlenstoffbasierten Materials, das der kugelförmige Graphit ist; und
Bereitstellen, auf einer Oberfläche des kohlenstoffbasierten Materials, einer siliziumhaltigen amorphen Beschichtungsschicht, die durch SiCₓ dargestellt wird, wobei 0,07<x<0,7,
wobei das Bereitstellen der siliziumhaltigen amorphen Beschichtungsschicht das Bereitstellen eines silanbasierten Gases und eines kohlenwasserstoffbasierten Gases umfasst und bei einer Temperatur von 400 °C bis 900 °C durchgeführt wird, und
wobei ein Volumenverhältnis des silanbasierten Gases zu dem kohlenwasserstoffbasierten Gas in einem Bereich von 1 : 0,01 bis 1 : 1 Vol.-% liegt.

12. Verfahren nach Anspruch 11, wobei das silanbasierte Gas und das kohlenwasserstoffbasierte Gas nacheinander oder gleichzeitig bereitgestellt werden.

13. Verfahren nach Anspruch 11, ferner umfassend das Bereitstellen einer Kohlenstoffbeschichtungsschicht, umfassend amorphen Kohlenstoff, nach dem Bereitstellen der siliziumhaltigen amorphen Beschichtungsschicht.

14. Lithium-Sekundärbatterie, umfassend:
eine negative Elektrode, umfassend das aktive Material für eine negative Elektrode nach einem der Ansprüche 1 bis 10;
eine positive Elektrode; und
einen Elektrolyten.

## Revendications

1. Matériau actif d'électrode négative pour une batterie secondaire au lithium, comprenant :
un matériau à base de carbone, le graphite sphérique ; et
une couche de revêtement amorphe contenant du silicium, disposée sur le matériau à base de carbone et représentée par SiCₓ où
0,07 < x < 0,7,
dans lequel la couche de revêtement amorphe contenant du silicium comprend des particules de silicium ayant un diamètre inférieur ou égal à 5 nm.

2. Matériau actif d'électrode négative selon la revendication 1, dans lequel, dans SiCₓ, 0,2 < x < 0,5.

3. Matériau actif d'électrode négative selon la revendication 1, dans lequel les particules de silicium comprennent des particules de silicium cristallin.

4. Matériau actif d'électrode négative selon la revendication 1, dans lequel la couche de revêtement amorphe contenant du silicium ne présente pas de pic à 0,43 V dans l'analyse de capacité différentielle (dQ/dV).

5. Matériau actif d'électrode négative selon la revendication 1, dans lequel les particules de silicium ont un diamètre de 3 nm à 5 nm.

6. Matériau actif d'électrode négative selon la revendication 1, dans lequel la couche de revêtement amorphe contenant du silicium comprend des particules de silicium et une matrice de carbone,
dans lequel la matrice de carbone est incluse dans une quantité de 10 parties en poids à 60 parties en poids par rapport à 100 parties en poids du total de la couche de revêtement amorphe contenant du silicium.

7. Matériau actif d'électrode négative selon la revendication 1, dans lequel la couche de revêtement amorphe contenant du silicium a une épaisseur de 5 nm à 4 000 nm.

8. Matériau actif d'électrode négative selon la revendication 1, dans lequel la couche de revêtement amorphe contenant du silicium est partiellement ou complètement disposée sur une surface du matériau à base de carbone.

9. Matériau actif d'électrode négative selon la revendication 1, dans lequel le matériau à base de carbone comprend du graphite naturel, du graphite artificiel, du carbone dur, du carbone mou ou une combinaison de ceux-ci.

10. Matériau actif d'électrode négative selon la revendication 1, dans lequel une couche de revêtement de carbone comprenant du carbone amorphe est disposée sur la couche de revêtement amorphe contenant du silicium.

11. Procédé de préparation d'un matériau actif d'électrode négative pour une batterie secondaire au lithium, le procédé comprenant :
la préparation d'un matériau à base de carbone, le graphite sphérique ; et
la fourniture, sur une surface du matériau à base de carbone, d'une couche de revêtement amorphe contenant du silicium, représentée par SiCₓ où 0,07 < x < 0,7,
dans lequel la fourniture de la couche de revêtement amorphe contenant du silicium comprend la fourniture d'un gaz à base de silane et d'un gaz à base d'hydrocarbure et est effectuée à une température comprise entre 400 °C et 900 °C, et
dans lequel un rapport en volume entre le gaz à base de silane et le gaz à base d'hydrocarbure est compris entre 1:0,01 et 1:1 en pourcentage du volume.

12. Procédé selon la revendication 11, dans lequel le gaz à base de silane et le gaz à base d'hydrocarbure sont fournis séquentiellement ou simultanément.

13. Procédé selon la revendication 11, comprenant en outre la fourniture d'une couche de revêtement de carbone comprenant du carbone amorphe, après la fourniture de la couche de revêtement amorphe contenant du silicium.

14. Batterie secondaire au lithium comprenant :
une électrode négative comprenant le matériau actif d'électrode négative selon l'une quelconque des revendications 1 à 10 ;
une électrode positive ; et
un électrolyte.
